Europäisches Patentamt

(19) European Patent Office

Office européen des brevets

(11) Numéro de publication: **0 074 885**
**A2**

(12) # DEMANDE DE BREVET EUROPEEN

(21) Numéro de dépôt: **82401621.6**

(22) Date de dépôt: **02.09.82**

(51) Int. Cl.³: **F 02 B 47/08**

(30) Priorité: **16.09.81 FR 8117539**

(43) Date de publication de la demande:
**23.03.83 Bulletin 83/12**

(84) Etats contractants désignés:
**AT DE GB IT SE**

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Cochard, Pierre**
**8, rue des Orfèvres**
**F-91770 Saint-Vrain(FR)**

(72) Inventeur: **Volpe, Mario**
**11, rue Tournant-Fils**
**F-91850 Bouray-sur-Juine(FR)**

(54) Dispositif d'alimentation pour un moteur à combustion interne.

(57) Le dispositif d'alimentation pour moteur à combustion interne, en particulier à allumage commandé, comporte des moyens d'injection de gaz d'échappement dans le circuit d'admission du moteur.

Ces moyens d'injection consistent en une conduite ou un passage 42, 44, 46, 49 reliant le circuit d'échappement 8, 9, 10 du moteur au circuit d'admission 15, 16, 26 et dont la perte de charge est adaptée par des étranglements 43, 45, 47 aux conditions de fonctionnement du moteur.

Application à la réduction du cliquetis ou de la combustion explosive des moteurs à allumage commandé.

FIG.1

EP 0 074 885 A2

## DISPOSITIF D'ALIMENTATION POUR UN MOTEUR
## A COMBUSTION INTERNE

La présente invention s'applique au circuit d'alimentation des moteurs à combustion interne, en particulier de ceux à allumage commandé fonctionnant à l'essence de pétrole ou avec d'autres carburants vaporisables.

L'un des moyens le plus utilisé pour augmenter la puissance et surtout le rendement des moteurs à combustion interne à allumage électrique consiste à augmenter le taux de compression des cylindres c'est-à-dire le rapport entre le volume maximal et le volume minimal du cylindre. Le taux de compression des moteurs d'automobiles courants est ainsi passé en quelques années de 8 à des valeurs de 9 et même 10 pour les moteurs les plus évolués mais cette augmentation du taux de compression est limitée par l'apparition du phéromène de cliquetis, notamment pour le fonctionnement avec des essences à faible indice d'octane, et particulièrement dans le cas des moteurs suralimentés en air à une pression supérieure à la pression atmosphérique.

Le phénomène du cliquetis ou de la combustion explosive réduit le rendement du moteur et provoque des vibrations désagréables et la destruction rapide des organes principaux du moteur. L'un des moyens utilisés pour pallier ces conséquences consiste à détecter le cliquetis par l'intermédiaire des vibrations qu'il engendre dans la culasse et à agir sur un paramètre de réglage du moteur qui est habituellement l'avance à l'allumage.

La diminution de l'avance à l'allumage présente l'inconvénient de diminuer le rendement du moteur, d'augmenter la température des gaz d'échappement et d'engendrer des vibrations.

Un autre dispositif anticliquetis permettant d'utiliser un taux de compression élevé tout en conservant un fonctionnement correct du moteur exempt de vibrations est proposé dans la demande de brevet français N° 8025310. Ce dispositif comporte des moyens d'injection de gaz d'échappement dans le circuit d'admission du moteur dans la dépendance d'un détecteur sensible au cliquetis ou à une valeur d'un paramètre susceptible d'engendrer le cliquetis, afin d'établir cette injection en réponse à la condition détectée de cliquetis.

L'injection de gaz d'échappement à l'admission du moteur, sous la différence naturelle de pression existant entre l'échappement et l'admission, a pour effet de diminuer la température dans la chambre de combustion, du fait d'une moindre proportion de mélange combustible, et ainsi de réduire ou de supprimer le phénomène de cliquetis, sans augmenter la température des gaz d'échappement et sans amener le moteur dans une zone de fonctionnement instable. Dans le cas des moteurs suralimentés, qui devraient, du point de vue de la consommation, présenter d'une part un taux de compression élevé pour les charges partielles, et d'autre part un taux de compression plus faible pour les charges élevées du moteur, accompagnées d'un taux de suralimentation important générateur de hautes performances, on utilise comme détecteur un organe sensible à la pression régnant dans le circuit d'admission du moteur, pour créer un taux croissant d'injection des gaz d'échappement aux fortes charges du moteur et introduire ainsi dans ces conditions une diminution des températures de combustion.

D'autres moyens de réduction du cliquetis en cas d'apparition de celui-ci ont été mis en oeuvre en injectant de l'eau dans les cylindres pour réduire la température de compression du mélange carburé. Ces moyens se révèlent complexes à mettre en oeuvre.

Le moyen de réduction efficace du cliquetis qui consiste à injecter des gaz d'échappement dans le circuit d'admission du moteur lorsque le phénomène de cliquetis est détecté, exige l'utilisation d'un matériel de détection et d'un clapet d'injection piloté et logé dans le circuit d'injection des gaz d'échappement. Ces équipements se révèlent à l'usage peu fiables et onéreux.

L'un des buts de la présente invention est de simplifier le système d'injection des gaz d'échappement dans le circuit d'admission du moteur et d'augmenter sa fiabilité tout en conservant au moteur de bonnes caractéristiques de puissance, de rendement et de souplesse de réglage même avec un taux de compression important ou bien un carburant à faible indice d'octane.

A cet effet, le dispositif d'alimentation pour un moteur à combustion interne, du type comportant des moyens d'injection de gaz d'échappement dans le circuit d'admission du moteur, est caractérisé en ce que ces moyens d'injection consistent en une conduite ou un passage d'injection reliant en permanence le circuit d'échappement du moteur au circuit d'admission indépendamment de la détection de l'apparition ou du risque du phénomène de cliquetis ou de combustion explosive sur ce moteur mais en vue de prévenir le cliquetis à tous les régimes de fonctionnement du moteur.

Selon un premier mode de réalisation applicable aux moteurs suralimentés comme aux moteurs à aspiration atmosphérique, la conduite d'injection relie la sortie de l'échappement, avant qu'elle ne subisse des pertes de charge importantes par suite de l'interposition de moyens de freinage tels qu'une turbine et/ou un système de pot(s) d'échappement, au collecteur d'admission du moteur, en aval de tous les organes auxiliaires d'admission tels que filtre(s) d'air et/ou compresseur et/ou carburateur à l'exclusion des moyens d'injection de carburant dans ou à proximité immédiate des cylindres, de manière à éviter que les gaz d'échappement recirculés ne traversent les moyens de freinage de l'échappement et les organes auxiliaires d'admission. Lorsque le moteur comporte plusieurs cylindres de combustion, l'échappement de chaque cylindre peut être relié à l'admission de ce cylindre par un passage dit de recirculation ménagé dans la culasse du moteur.

Selon un mode de réalisation plus complexe, lorsque le moteur comporte plusieurs cylindres de combustion, l'échappement de chaque cylindre est relié par un passage dit de recirculation à l'admission d'un autre des cylindres placé au moins partiellement en situation d'aspiration lorsque le cylindre est en situation d'échappement.

Selon un autre mode de réalisation pour un moteur doté d'un groupe turbine-compresseur actionné par l'échappement du moteur, la conduite d'injection relie la sortie de l'échappement prise à l'amont de la turbine (avant la perte de charge à travers la turbine) à l'admission de l'air de combustion à l'amont du compresseur (avant la surpression de l'air par le compresseur) de manière à disposer d'une forte surpression de l'échappement par rapport à l'aspiration du compresseur.

En variante, la conduite d'injection relie la sortie de l'échappement prise à l'aval de la turbine (après la perte de charge à travers la turbine), à l'admission de l'air de combustion à l'amont du compresseur (avant la surpression de l'air par le compresseur) de manière à disposer pour la recirculation, de gaz d'échappement refroidis par leur détente à travers la turbine.

La conduite d'injection qui relie la sortie de l'échappement, prise à l'aval de la turbine, à l'admission de l'air de combustion à l'amont du compresseur présente alors de préférence une section importante respectivement supérieure à la section du collecteur d'admission à l'aval du compresseur, ou du conduit d'admission à l'amont du compresseur, ou du collecteur d'échappement à l'amont ou à l'aval de la turbine.

Selon un autre mode de réalisation utilisant des moyens connus d'injection des gaz d'échappement pour un moteur doté d'un groupe turbine-compresseur actionné par l'échappement du moteur et d'un clapet de décharge contrôlé de l'échappement du moteur en court circuit de la turbine, la conduite d'injection relie la conduite de décharge du clapet, dotée de moyens de perte de charge vers l'échappement à l'aval de la turbine, au collecteur d'admission du moteur en aval du compresseur (après la surpression de l'air par le compresseur) et de tous les organes auxiliaires d'admission tel qu'un carburateur à l'exclusion des moyens d'injection de carburant à proximité immédiate des cylindres.

Selon une autre variante de l'invention, la conduite d'injection relie la conduite de décharge à l'admission du moteur en amont du compresseur. Ainsi, la recirculation est plus aisée car les gaz d'échappement recirculés sont déchargés dans une conduite où règne

la pression atmosphérique.

Dans un tel mode de réalisation, lorsque le moteur comporte plusieurs cylindres, la conduite d'injection peut se subdiviser en plusieurs pipes d'injection qui aboutissent chacune dans le conduit d'admission du cylindre à proximité de la soupape d'admission de manière à réduire l'encrassement du collecteur d'admission du moteur par les gaz d'échappement de recirculation.

Le clapet de décharge peut être contrôlé par des moyens de commande sensibles au contrôle de puissance du moteur tel qu'un levier d'accélérateur, ces moyens de commande étant aptes à faire varier l'ouverture du clapet de décharge lorsque la demande de puissance du moteur varie, y compris à maintenir le clapet en état de fermeture complète lorsque la demande de couple augmente à bas régime de rotation du moteur, de manière à provoquer pour un régime de rotation élevé du moteur une injection de gaz d'échappement dont la proportion par rapport au mélange combustible est fonction de la puissance désirée.

Pour l'exploitation des divers modes de réalisation des dispositifs selon l'invention, la perte de charge de la conduite ou du passage d'injection est adaptée aux caractéristiques et aux conditions de fonctionnement du moteur pour provoquer un taux de recirculation des gaz d'échappement variant dans des limites restreintes à tous les régimes de puissance et de rotation du moteur de préférence entre 0 et 40%.

Selon le mode de réalisation le plus courant des moyens d'injection selon l'invention, la perte de charge de la conduite ou du passage d'injection est contrôlée par au moins un étranglement calibré pour les caractéristiques et les conditions de fonctionnement du moteur. L'étranglement est de préférence monté amovible et/ou réglable dans la conduite ou le passage d'injection de manière à permettre son remplacement et/ou son réglage aisé sur le moteur pour l'adapter aux caractéristiques et aux conditions de fonctionnement de celui-ci. L'étranglement peut aussi être réglable de façon continue en fonction des conditions de fonctionnement du moteur.

D'autres buts, avantages et caractéristiques de la présente invention apparaîtron à la lecture de la description qui va suivre d'un mode de réalisation non limitatif de l'invention, faite en regard du dessin annexé où:

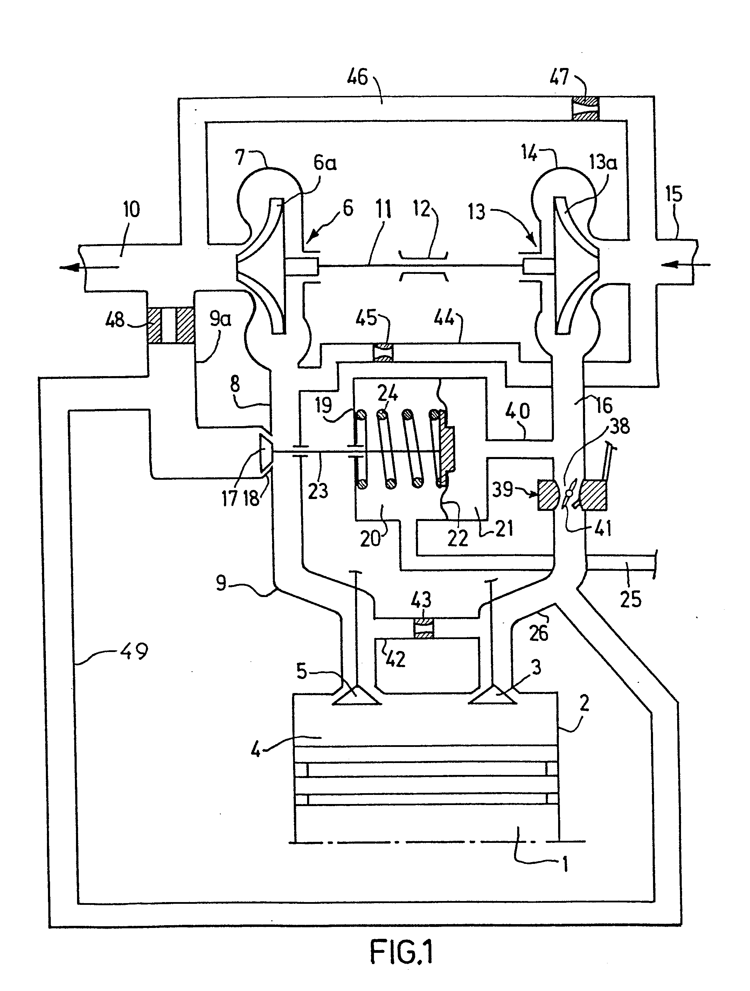

. la figure 1 représente en coupe schématique le dispositif d'alimentation d'un moteur à combustion interne, notamment d'un moteur à carburateur et à allumage contrôlé, doté d'un turbocompresseur entraîné par l'échappement du moteur et dont, selon une variante, la conduite d'injection relie la conduite de décharge à l'admission du moteur en aval du compresseur;

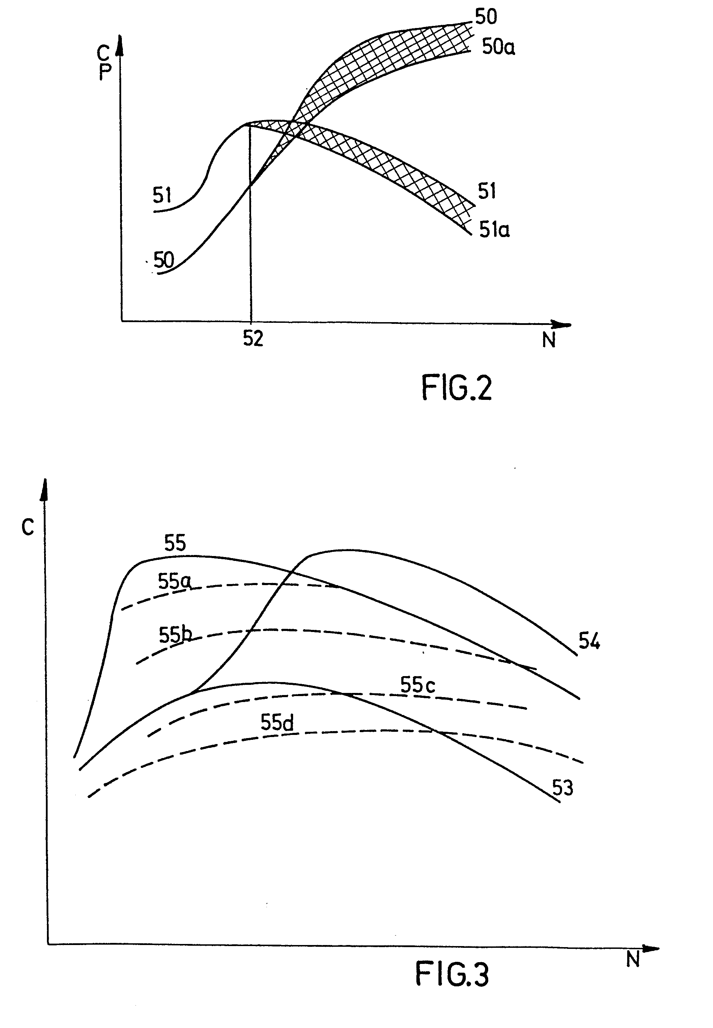

. la figure 2 et 3 illustrent les résultats obtenus avec ces moyens d'injection.

Selon la figure 1, le moteur est représenté schématiquement par un piston 1 qui se déplace à l'intérieur d'un cylindre 2 pour successivement aspirer un mélange carburé à travers le passage annulaire ménagé autour d'une soupape d'admission 3 ouverte, puis le comprimer dans la chambre de combustion 4 et, après allumage et détente du mélange carburé brûlé, refouler les gaz brûlés à travers le

passage annulaire ménagé autour d'une soupape d'échappement 5 ouverte.

Le moteur est équipé d'une installation de suralimentation en air constituée d'une turbine centrifuge 6 dont le rotor 6a, logé à l'intérieur d'une volute 7, est placé sur le trajet des gaz d'échappement d'un conduit 8 d'amenée à la turbine relié à une pipe d'échappement 9 branchée directement sur la sortie de la soupape d'échappement 5. L'entrée de la turbine 6 est radiale et l'écoulement centripète des gaz d'échappement aboutit à une sortie axiale reliée au conduit d'échappement 10 proprement dit. Le rotor de turbine 6a est relié par un arbre 11 supporté par un palier 12 généralement lubrifié par la pression d'huile du moteur, à un rotor 13a d'un compresseur 13 logé dans une volute 14 et relié par une conduite d'entrée 15 à des moyens d'entrée d'air généralement constitués par au moins un filtre à air.

Le rotor de compresseur 13a entraîné en rotation par le rotor de turbine 6a aspire l'air de combustion du moteur axialement et le refoule radialement selon un écoulement centrifuge dans le collecteur d'admission 16 qui débouche sur l'entrée de la soupape d'admission 3.

Afin de limiter la pression d'admission dans le collecteur 16 et dans la chambre de combustion 4 et, par voie de conséquence, la pression maximale de combustion s'exerçant sur le piston 1 dans le cas d'un moteur diesel et, respectivement, le risque de cliquetis dans le cas d'un moteur à allumage commandé, le circuit de la turbine 6 est muni d'un système de dérivation constitué d'un clapet de décharge 17 en appui sur un siège conique 18. Le clapet 17 en se décollant du siège 18 ouvre un passage annulaire qui permet aux gaz d'échappement de se décharger directement de la pipe d'échappement 9 dans un conduit de décharge 9a et de là au conduit d'échappement 10 en court-circuitant le passage de ces gaz le long des ailettes du rotor 6a de turbine 6. Le débit de gaz d'échappement à travers la turbine 6 est ainsi réduit, ce qui diminue considérablement la vitesse de rotation des rotors 6a et 13a et, par conséquent, la pression de refoulement du compresseur dans le collecteur d'admission 16.

La régulation de la pression d'air dans le collecteur d'admission 16 peut être obtenue à l'aide d'une capsule de régulation 19 qui comporte deux chambres 20 et 21 séparées par un piston 22, généralement du type à membrane pour obtenir une étanchéité parfaite et une faible hystérésis de fonctionnement. La chambre 21 est reliée au collecteur d'admission 16 en aval du compresseur 13 et la pression d'air de suralimentation régnant dans cette chambre 21 agit sur le piston 22, relié par une tige 23 au clapet de décharge 17, à l'encontre d'un ressort hélicoïdal 24 logé dans la chambre 20. Lorsque la pression dans le collecteur 16 à l'aval du compresseur 13 et agissant sur le piston 22 dépasse le tarage du ressort 24, le clapet 17 se décolle de son siège 18 et au débit de gaz d'échappement croissant se décharge

5

0074885

BAD ORIGINAL

directement au conduit d'échappement 10, ce qui réduit la vitesse des rotors de turbine 6a et de compresseur 13a et stabilise immédiatement la pression de suralimentation dans le collecteur d'admission 16. Le clapet de décharge 17 peut être contrôlé par des moyens supplémentaires constitués par exemple par une conduite de dépression 25 reliée à la chambre 20 et placée sous la dépendance d'une électrovalve sensible,par exemple, à l'apparition du phénomène de cliquetis dans le moteur ou bien à la position du levier d'accélération du moteur. On a représenté également sur la figure le cas des moteurs à carburateur. Le venturi 38 du carburateur 39 placé en aval du conduit 40 de raccord du collecteur 16 à la chambre 21 et surtout le papillon 41 des gaz constituent un étranglement à perte de charge importante pour le collecteur d'admission 16 aux faibles charges du moteur et la suralimentation du collecteur 16 pour ces faibles charges ne présente pas d'intérêt car la pression régnant dans la chambre de combustion 4 juste avant la fermeture de la soupape d'admission 3 est déterminée essentiellement par la puissance demandée au moteur quelle que soit la pression de suralimentation, toute majoration de la pression d'air dans le collecteur d'admission 16 étant immédiatement compensée par un étranglement supplémentaire du papillon des gaz. Le carburateur 39 peut ainsi être utilisé soit avec le turbo compresseur de suralimentation 6, 11, 12, 13 soit en supprimant ce turbo-compresseur. Pour les moteurs à allumage commandé qui constituent plus particulièrement le domaine d'application de l'invention, l'alimentation en air du moteur par le groupe turbo-compresseur peut être combinée soit à un carburateur soit à un système d'injection de carburant non représenté.

Selon un premier mode de réalisation de l'invention, une conduite d'injection de gaz d'échappement 42 relie la sortie de l'échappement en amont de la turbine 6 directement au collecteur d'admission 16 en aval du compresseur 13 et du carburateur 39 s'il en existe un.

Un étranglement 43 éventuellement amovible et/ou réglable peut être interposé dans la conduite 42 pour adapter la perte de charge de cette conduite aux conditions d'exploitation et aux caractéristiques du moteur. Selon un mode de réalisation particulièrement avantageux, économique et fiable, la conduite 42 peut être remplacée par un canal ménagé directement dans la culasse du cylindre 2.

Lorsque le moteur comporte plusieurs cylindres 2, la pipe d'échappement 9 de chaque cylindre peut être reliée à la pipe d'admission 26 de ce cylindre,ou de préférence, la pipe d'échappement 9 d'un cylindre 2 est reliée à la pipe d'admission 26 d'un autre cylindre dont la soupape d'aspiration 3 est au moins partiellement ouverte lorsque la soupape d'échappement 5 du cylindre 2 est ouverte.

Selon ce premier mode de réalisation de l'invention, lorsque le moteur est en

fonctionnement sans groupe turbo-compresseur, l'aspiration du piston est suffisante aux faibles puissances du moteur pour aspirer un débit de gaz d'échappement important et pour les puissances plus importantes du moteur, la pression des gaz d'échappement est apte à provoquer des injections croissantes de gaz d'échappement. La conduite d'injection 42 peut donc présenter une section relativement faible et le fonctionnement du carburateur 39 n'est pas perturbé, car les gaz de recirculation ne traversent pas le carburateur. Par contre, lorsque le moteur est équipé d'un groupe turbo-compresseur, la pression d'échappement, pour certains régimes du moteur, n'est que très légèrement supérieure à la pression dans le collecteur d'admission 16 à l'aval de la turbine 13 et pour assurer une recirculation suffisante il convient de prévoir une section importante pour la conduite ou le canal 42.

Selon un deuxième mode de réalisation de l'invention, pour un moteur équipé du groupe turbo-compresseur 6—11—12—13, une conduite d'injection 44 relie la sortie de l'échappement en l'amont de la turbine 6 à la conduite d'entrée 15 du compresseur 13. La conduite 44 peut être munie d'un étranglement de réglage 45 éventuellement amovible et/ou réglable pour adapter la perte de charge de cette conduite aux caractéristiques et aux conditions d'exploitation du moteur.

Le deuxième mode de réalisation de l'invention permet de disposer d'une surpression importante de l'échappement par rapport à la pression atmosphérique d'admission à l'entrée du compresseur 13 et la conduite 44 peut être de section réduite. Sur un moteur de voiture moyenne, on peut ainsi obtenir aisément une recirculation au taux de 10% en utilisant une conduite 44 d'un diamètre de 10 millimètres seulement.

La recirculation des gaz d'échappement est par contre réduite au cours des phases d'accélération du moteur ce qui facilite la montée en vitesse de la turbine qui ne subit pas de perte d'enthalpie par dérivation.

Selon un troisième mode de réalisation de l'invention, une conduite d'injection 46 dotée éventuellement d'un étranglement d'adaptation 47, relie le conduit d'échappement 10 en aval de la turbine 6 à la conduite d'entrée 15 du compresseur. Selon ce troisième mode de réalisation, la pression des gaz d'échappement est réduite par la traversée de la turbine 6 et dépasse la pression atmosphérique seulement de la perte de charge à-travers les pots d'échappement. Pour obtenir des taux de recirculation significatifs de l'ordre d'au moins 10%, il faut prévoir une section importante pour la conduite 46 mais le taux de recirculation reste relativement plus faible que dans les deux systèmes précédents. Les gaz d'échappement recirculés sont plus froids et produisent ainsi une moindre charge thermique les le refroidisseur d'air d'admission récupérante et installé sur certains moteurs à turbo-compresseur 13. De plus, la recirculation des gaz d'échappement selon

ce mode de réalisation ne perturbe pas le fonctionnement du groupe turbo-compresseur et ne retarde pas sa montée en vitesse sur les accélérations.

Selon un quatrième mode de réalisation plus complexe, le conduit de décharge 9a du clapet de décharge 17, est doté d'un étranglement 48 qui limite le débit de décharge vers le conduit d'échappement 10 et est relié en amont de cet étranglement 48 par une conduite d'injection 49 directement à la pipe d'admission 26 de la soupape d'admission 3. Un étranglement amovible et/ou réglable peut être disposé sur la conduite 49 mais il ne paraît pas utile dans la plupart des cas, car le débit de gaz de recirculation est contrôlé par le clapet de décharge 17 et par l'étranglement 48 qui peut être remplacé par un bouchon.

Selon ce quatrième mode de réalisation, l'injection de gaz d'échappement dans le circuit d'admission du moteur ne se produit que pour les fortes surpressions au collecteur d'admission 16 lorsqu'un risque sérieux de cliquetis existe. La conduite de dépression 25, contrôlée par exemple par le levier d'accélération du moteur, permet aussi, en variante, de déclencher l'injection des gaz d'échappement dans le circuit d'admission du moteur pour les faibles accélérations de manière à réduire la puissance du moteur tout en améliorant la carburation par réchauffe du mélange carburé introduit dans le cylindre, au contact des gaz d'échappement chauds recirculés.

On doit comprendre que la figure unique représente quatre modes de réalisation de l'invention qui pourraient être réalisés simultanément mais dont, pour des raisons pratiques et de coût de réalisation, un seul est réalisé sur un moteur.

Le premier mode de réalisation peut être appliqué par cylindre ou par groupe de deux cylindres tandis que les autres modes sont appliqués à tous les cylindres d'un moteur simultanément.

La figure 2 représente graphiquement en fonction du nombre de tours par minute N du moteur, les variations de la puissance P sur une courbe 50 et respectivement du couple C du moteur sur une courbe 51 pour un moteur équipé de moyens d'injection de gaz d'échappement selon le quatrième mode de réalisation décrit. A partir de l'ouverture du clapet 17 au point 52 correspondant sensiblement au couple maximal du moteur, des taux de recirculation différents sont obtenus en fonction des conditions de fonctionnement du moteur transmises par exemple par la conduite 25. Les espaces compris entre les courbes 50 et 50a et respectivement 51 et 51a délimitent les puissances et les couples obtenus par le procédé de recirculation mis en œuvre par l'ouverture du clapet 17 et modulés en fonction du taux de recirculation contrôlé par l'ouverture du clapet 17.

La figure 3 représente les couples C du moteur et la pression moyenne correspondant à ces couples, en fonction du nombre de tours par minute N de ce moteur pour

9

des taux de compression optima et divers adaptations et modes de réalisation du dispositif d'injection de gaz d'échappement selon l'invention, en particulier en remplaçant le groupe turbo-compresseur 6, 11, 12, 13 par un compresseur volumétrique. La courbe 53 représente la courbe de couple obtenue avec le moteur fonctionnant en aspiration naturelle avec recirculation. La courbe 54 représente la courbe de couple obtenue avec un groupe turbo-compresseur et des taux de recirculation modérés de l'ordre de 5 à 10% correspondant aux modes de réalisation illustrés sur la figure 1. La courbe 55 représente la courbe de couple que l'on peut obtenir avec un compresseur volumétrique de gavage du moteur en air de combustion et un très fort taux de recirculation des gaz d'échappement. Pour illustrer combien ce mode de réalisation exige des taux de recirculation élevés pour être efficace, on a représenté en pointillé les courbes de couple obtenues avec le compresseur volumétrique et des taux de recirculation respectivement de 20% pour la courbe 55a, 10% pour la courbe 55b, 5% pour la courbe 55c et 0% pour la courbe 55d. On voit sur cette dernière courbe·55d que le compresseur volumétrique sans recirculation permet d'obtenir des couples supérieurs à ceux obtenus en aspiration naturelle avec recirculation seulement pour les régimes de rotation les plus élevés du moteur. La valorisation de l'utilisation du compresseur volumétrique en vue d'obtenir des couples importants à bas régime de rotation du moteur et une courbe de couple pointue qui donne de l'agrément de conduite au moteur en limitant les changements de vitesse, exige l'emploi de la recirculation des gaz d'échappement à des taux élevés qui peuvent atteindre 40%. Le compresseur volumétrique permet une facilité de réglage supplémentaire qui évite le gaspillage du carburant, par injection du carburant dans la conduite d'aspiration de l'air de combustion en amont du compresseur volumétrique. La recirculation des gaz de combustion par des conduites en amont du carburateur telles que les conduites 44 ou 46 de la figure 1 perturbe en effet la carburation dès que les taux de recirculation deviennent significatifs.

Bien entendu, la présente invention n'est nullement limitée aux modes de réalisation décrits et représentés; elle est susceptible de nombreuses variantes accessibles à l'homme de l'art, suivant les applications envisagées et sans que l'on ne s'écarte de l'esprit de l'invention.

Ainsi, selon une variante non représentée du mode de réalisation de la figure 1, la conduite d'injection 49 relie la conduite de décharge 9a du clapet 17 dotée de moyens de perte de charge 48 vers l'échappement à l'aval de la turbine 6 à l'admission du moteur en amont du compresseur 13.

REVENDICATIONS                    0074885

1.- Dispositif d'alimentation pour un moteur à combustion interne, du type comportant des moyens d'injection de gaz d'échappement dans le circuit d'admission du moteur, dans lequel les moyens d'injection consistent en une conduite ou un passage d'injection (42, 44, 46, 49) reliant en permanence le circuit d'échappement (9, i·) du moteur au circuit d'admission (15, 16, 26) indépendamment de la détection de l'apparition ou du risque du phénomène de cliquetis ou de combustion explosive sur ce moteur mais en vue de prévenir le cliquetis à tous les régimes de fonctionneemnt du moteur, caractérisé en ce que la conduite d'injection (42) relie la sortie de l'échappement (9), avant qu'elle subisse des pertes de charge importantes par suite de l'interposition de moyens de freinage tels qu'une turbine (6) et/ou un système de pot(s) d'échappement, au collecteur d'admission (26) du moteur, en aval de tous les organes auxiliaires d'admission tels que filtre(s) d'air et/ou compresseur (13) et/ou carburateur (39) à l'exclusion des moyens d'injection de carburant dans ou à proximité immédiate des cylindres, de manière à éviter que les gaz d'échappement recirculés ne traversent les moyens de freinage de l'échappement et les organes auxiliaires d'admission, et en ce que lorsque le moteur comporte plusieurs cylindres de combustion, l'échappement (9) de chaque cylindre est relié à l'admission (26) de ce cylindre par un passage (42) dit de recirculation ménagé dans la culasse du moteur.

2.- Dispositif d'alimentation selon la revendication 1, pour un moteur doté d'un groupe turbine-compresseur actionné par l'échappement du moteur, caractérisé en ce que la conduite d'injection (44) relie la sortie de l'échappement (8) prise à l'amont de la turbine (6) -avant la perte de charge à travers la turbine (6)- à l'admission (15) de l'air de combustion à l'amont du compresseur (13) -avant la surpression de l'air par ile compresseur (13)- de manière à disposer d'une forte surpression de l'échappement par rapport à l'aspiration du compresseur (13).

3.- Dispositif d'alimentation selon la revendication 1 pour un moteur doté d'un groupe turbine-compresseur actionné par l'échappement du moteur, caractérisé en ce que la conduite d'injection (46) relie la sortie (10) de l'échappement prise à l'aval de la turbine (6) après la perte de charge à travers la turbine (6) à l'admission (15) de l'air de combustion à l'amont du compresseur (13) -avant la surpression de l'air par le compresseur (13)- de manière à disposer pour la recirculation de gaz d'échappement refroidis par leur détente à travers la turbine (6).

4.- Dispositif d'alimentation selon la revendication 3, caractérisé en ce que la conduite d'injection (46) qui relie la sortie (10) de l'échappement, à l'aval de la turbine (6), à l'admission (15) de l'air de combustion à l'amont du compresseur (13) présente une section importante respectivement supérieure à la section du collecteur d'admission (16) à l'aval du compresseur, ou du conduit d'admission (15) à l'amont du compresseur, ou du collecteur d'échappement (8, 10) à l'amont ou à l'aval de la turbine (6).

5.- Dispositif d'alimentation pour un moteur à combustion interne doté d'un groupe turbine-compresseur actionné par l'échappement du moteur et d'un clapet de décharge contrôlé par l'échappement du moteur en court-circuit de la turbine dans lequel les moyens d'injection consistent en une conduite ou un passage d'injection (42, 44, 46, 49) reliant en permanence le circuit d'échappement (9, 10) du moteur au circuit d'admission (15, 16, 26) indépendamment de la détection de l'apparition ou du risque du phénomène de cliquetis ou de combustion explosive sur ce moteur mais en vue de prévenir le cliquetis à tous les régimes de fonctionnement du moteur, le dit dispositif étant caractérisé en ce que la conduite d'injection (49) relie la conduite de décharge (9a) du clapet (17) dotée de moyens de perte de charge (48) vers l'échappement à l'aval de la turbine (6), au collecteur d'admission (26) du moteur en aval du compresseur (13)-après la surpression de l'air par le compresseur (13)- et de tous les organes auxiliaires d'admission tel qu'un carburateur (39) à l'exclusion des moyens d'injection de carburant à proximité immédiate des cylindres.

6.- Dispositif d'alimentation selon la revendication 5, caractérisé en ce que lorsque le moteur comporte plusieurs cylindres, la conduite d'injection se subdivise en plusieurs pipes d'injection qui aboutissent chacune dans la pipe d'admission (26) du cylindre (2) à proximité de la soupape d'admission (3) de manière à réduire l'encrassement du collecteur d'admission du moteur par les gaz d'échappement de recirculation.

7.- Dispositif d'alimentation selon la revendication 5, caractérisé en ce que la conduite d'injection (49) relie la conduite de décharge (9a) du clapet (17) dotée de moyens de perte de charge (48) vers l'échappement à l'aval de la turbine (6), à l'admission du moteur en amont du compresseur (13).

8.- Dispositif d'alimentation selon une quelconque des revendications 5 à 7, caractérisé en ce que le clapet de décharge (17) est contrôlé par des moyens de commande (25) sensibles au contrôle de puissance du moteur tel qu'un levier d'accélérateur, ces moyens de commande (25) étant aptes à faire varier l'ouverture du clapet (17) de décharge lorsque la demande de puissance du moteur varie, y compris à maintenir le clapet (17) en état de fermeture complète lorsque la demande de couple augmente à bas régime de rotation du moteur, de manière à provoquer pour un régime de rotation élevé du moteur, une injection de gaz d'échappement dont la proportion par rapport au mélange combustible est fonction de la puissance désirée.

9.- Dispositif d'alimentation selon l'une des revendications 1 à 8, caractérisé en ce que la perte de charge de la conduite ou du passage d'injection (42, 44, 46, 49) est adaptée aux caractéristiques et aux conditions de fonctionnement du moteur pour provoquer un taux de recirculation des gaz d'échappement variant dans des limites restreintes à tous les régimes de puissance et de rotation du moteur.

10.- Dispositif d'alimentation selon la revendication 9, caractérisé en ce que le taux de recirculation des gaz d'échappement est compris entre 0 et 40%.

11.- Dispositif d'alimentation selon l'une des revendications 9 ou 10, caractérisé en ce que la perte de charge de la conduite ou du passage d'injection (42, 44, 46, 49) est contrôlée par au moins un étranglement calibré (43, 45, 47) pour les caractéristiques et les conditions de fonctionnement du moteur.

12.- Dispositif d'alimentation selon la revendication 11, caractérisé en ce que l'étranglement (43, 45, 47) est monté amovible et/ou réglable dans la conduite ou le passage d'injection (42, 44, 46, 49) de manière à permettre son remplacement et/ou son réglage aisé sur le moteur pour l'adapter aux caractéristiques et aux conditions de fonctionnement de celui-ci.

13.- Dispositif d'alimentation selon l'une des revendications 11 ou 12, caractérisé en ce que l'étranglement (43, 45, 47) est réglable de façon continue en fonction des conditions de fonctionnement du moteur.

FIG.1

FIG.2

FIG.3